# FASCICULE DE BREVET EUROPEEN

(11) **EP 3 443 388 B1**
(45) Date de publication et mention de la délivrance du brevet: **23.08.2023**
(21) Numéro de dépôt: 17716557.8
(22) Date de dépôt: 14.04.2017
(51) Int. Cl.: G01T 1/16, G01T 1/163, G01T 1/167

(54) **DISPOSITIF DE MESURE D'UNE CONTAMINATION INTERNE RADIOACTIVE CHEZ UN INDIVIDU.**
VORRICHTUNG ZUR BESTIMMUNG EINER INTERNEN RADIOAKTIVEN KONTAMINATION BEI EINER PERSON
DEVICE FOR INTERNAL CONTAMINATION LEVEL OF A PERSON

(30) Priorité: 15.04.2016 FR 1653335
(43) Date de publication de la demande: 20.02.2019
(73) Titulaire: Institut de Radioprotection et de Sûreté Nucléaire, 92260 Fontenay aux Roses (FR)
(72) Inventeur: FRANCK, Didier, Alain, 91430 IGNY (FR); VILTARD, Didier, Marcel, Roger, 78955 CARRIERES-SOUS-POISSY (FR)
(74) Mandataire: Regimbeau
(86) Numéro de dépôt international: PCT/EP2017/059061
(87) Numéro de publication internationale: WO 2017/178648

(56) Documents cités:
- M. J. YOUNGMAN: "Calibration and evaluation of a transportable in vivo monitoring system for accident monitoring of internal contamination", RADIATION PROTECTION DOSIMETRY., vol. 107, no. 4, 1 décembre 2003 (2003-12-01), pages 259-267, XP055317944, GB ISSN: 0144-8420, DOI: 10.1093/oxfordjournals.rpd.a006399
- DIDIER FRANCK ET AL: "Development of a fleet of mobile units for Accident Monitoring of Internal Contamination: application in the frame of Fukushima accident", PROGRESS IN NUCLEAR SCIENCE AND TECHNOLOGY, vol. 4, 1 janvier 2014 (2014-01-01), pages 56-59, XP055318739, ISSN: 2185-4823, DOI: 10.15669/pnst.4.56

## Description

La présente invention concerne un dispositif de mesure d'une contamination radioactive chez un individu.

En cas d'accident nucléaire, il est nécessaire d'évaluer le risque radiologique résultant notamment de contaminations radioactives internes des personnes, notamment des travailleurs du nucléaire et de la population.

A cet effet, on connait déjà, dans l'état de la technique, des véhicules destinés à contrôler et évaluer la contamination interne de la population ayant été contaminée en cas de crise (voir p.e. les publications par M. J. Youngman: "Calibration and évaluation of a transportable in vivo monitoring system for accident monitoring of internal contamination", RADIATION PROTECTION DOSIMETRY, vol. 107, no. 4, 1 décembre 2003, pages 259-267 et par Diedier Franck et al. "Development of a fleet of mobile units for Accident Monitoring of Internal Contamination: application in the frame of Fukushima accident", PROGRESS IN NUCLEAR SCIENCE AND TECHNOLOGY, vol. 4, 1 janvier 2014, pages 56-59).

Ces véhicules sont équipés de dispositifs de mesure de la contamination.

Bien que de tels véhicules soient particulièrement efficaces pour remplir leurs fonctions de contrôle et d'évaluation de la contamination, il existe certaines situations pour lesquelles ces véhicules ne sont pas adaptés.

En particulier, il est nécessaire que les personnes entrent dans le véhicule pour y être examinées. Or, dans le cas de personnes à mobilité réduite, notamment en civière ou en chaise roulante, ces personnes ne peuvent pas accéder aux dispositifs de mesure du véhicule.

En outre, dans certains cas, le véhicule pourrait présenter des difficultés d'accès dans les lieux où les personnes devraient être examinées.

L'invention a notamment pour but de remédier à ces inconvénients, en fournissant un dispositif de mesure permettant de compléter ceux des véhicules précités pour les cas où ces véhicules ne seraient pas adaptés ou pour les cas où des personnes ne peuvent être examinées par les dispositifs de mesure habituels.

A cet effet, l'invention a notamment pour objet un dispositif de mesure d'une contamination radioactive chez un individu, comportant un premier détecteur conformé pour une mesure sur une thyroïde de l'individu, et un second détecteur conformé pour une mesure sur un thorax de l'individu, caractérisé en ce qu'il comporte un dispositif portable de support des premier et second détecteurs, comprenant :
- une traverse de support s'étendant dans une direction transversale,
- au moins un pied de support, s'étendant entre une extrémité inférieure destinée à être posée sur un sol, et une extrémité supérieure portant ladite traverse de support,
- un organe de support, porté par la traverse, comprenant des première et seconde parties mobiles l'une par rapport à l'autre dans une direction longitudinale perpendiculaire à la direction transversale, la première partie mobile portant le premier détecteur, et la seconde partie mobile portant le second détecteur.

Un tel dispositif de mesure, comprenant un dispositif de support portable, peut être transporté aisément en dehors de tout véhicule, pour être adapté à une personne à mobilité réduite notamment, ou pour être emporté dans une zone inaccessible pour un véhicule.

Grâce à la mobilité des parties de l'organe de support, la position des détecteurs peut être adaptée à la morphologie ou à la position de la personne à examiner. Il n'est donc pas nécessaire que ces détecteurs présentent de grandes dimensions couvrant toutes les morphologies.

L'utilisation de détecteurs de dimensions réduites permet l'utilisation d'un dispositif de support de dimensions réduites, et plus particulièrement d'un dispositif de support portable. Par le terme « portable », on entend que le dispositif de support peut être transporté aisément par un nombre réduit d'opérateurs, idéalement un ou deux opérateurs, peut être mis en place dans tout environnement adapté, et peut être déplacé manuellement.

Un dispositif de mesure selon l'invention peut comporter en outre l'une ou plusieurs des caractéristiques suivantes, prises seules ou selon toutes combinaisons techniquement envisageables.
- L'organe de support est mobile par inclinaison autour de la traverse, autour de la direction transversale.
- La traverse étant portée, dans une direction verticale, à une hauteur définie par l'au moins un pied de support, chaque pied de support est manoeuvrable de sorte que ladite hauteur est modifiable.
- Chaque pied de support est télescopique.
- La masse du dispositif de support est inférieure à 40 kg.
- Chaque pied de support est assemblé de manière amovible à la traverse.
- Le dispositif de mesure comporte un dispositif d'acquisition de données, comprenant : une chaîne d'acquisition de données reliée aux détecteurs pour en récolter des données, et des moyens de spectrométrie gamma, propre à acquérir un spectre à partir des données récoltées, et à analyser ce spectre.

L'invention sera mieux comprise à la lecture de la description qui va suivre, donnée uniquement à titre d'exemple et faite en se référant aux figures annexées, parmi lesquelles :
- la figure 1 est une vue en perspective d'un dispositif de mesure selon un exemple de mode de réalisation de l'invention, en position d'utilisation sur un individu allongé ;
- la figure 2 est une vue schématique de principe des différents composants formant le dispositif de mesure de la figure 1.

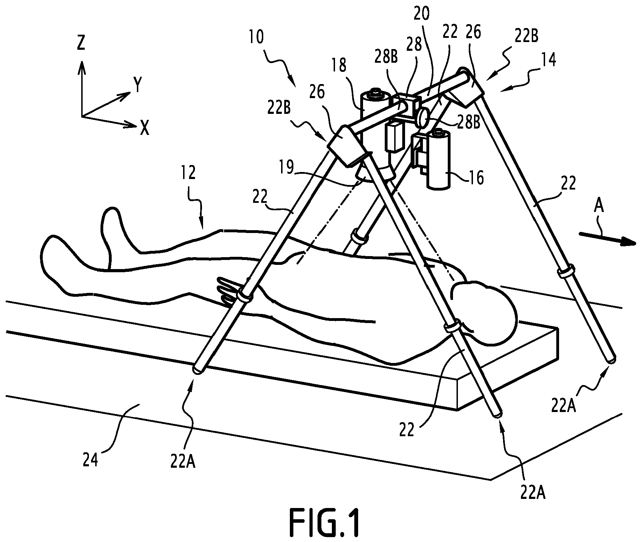

On a représenté, sur la figure 1, un dispositif 10 de mesure d'une contamination radioactive chez un individu 12.

Sur cette figure 1, l'individu 12 est allongé, par exemple sur un brancard.

Le dispositif de mesure 10 comporte un dispositif portable de support 14, destiné à porter des premier 16 et second 18 détecteurs de mesure de contamination radioactive.

Chaque détecteur 16, 18 est destiné à mesurer les rayonnements X et gamma émis par les organes ciblés de l'individu 12.

Plus particulièrement, le premier détecteur 16 est conformé pour une mesure sur la thyroïde de l'individu 12. Ce premier détecteur 16 est donc destiné à être positionné au niveau du cou de l'individu 12.

Le second détecteur 18 quant à lui est conformé pour une mesure sur le thorax de l'individu 12. Ce second détecteur 18 présente donc des dimensions supérieures à celles du premier détecteur 16. Ce second détecteur 18 est destiné à être positionné au niveau du torse de l'individu 12, pour cibler des organes, tels que, par exemple, les poumons, puis par un étalonnage approprié permettre la mesure de la contamination interne dans le corps entier.

Chaque détecteur 16, 18 comporte par exemple de manière classique un cristal d'lodure de Sodium dopé au Thallium Nal (TI) et un photomultiplicateur. Ces détecteurs 16, 18 sont propres à détecter des rayonnements X et gamma (γ) sur des gammes d'énergies comprises entre 20 et 2000 keV. En variante, le détecteur est de type semiconducteurs Germanium (GeHP), ou de type équivalent.

Le premier détecteur 16 présente par exemple un diamètre d'environ 50 mm, et il est de préférence étalonné pour mesurer des gammes d'énergies comprises entre 100 et 1000 keV. Le premier détecteur 16 comporte avantageusement un collimateur de métal et plomb, destiné à limiter le bruit de fond et à réduire l'impact d'éventuelles émissions transverses pouvant fausser la mesure à la thyroïde, et permettant ainsi d'obtenir des mesures reproductibles.

Le second détecteur 18 présente par exemple un diamètre d'environ 76 mm, et il est de préférence étalonné pour mesurer des gammes d'énergies comprises entre 20 et 2000 keV. Le second détecteur 18 comporte avantageusement une cloche de métal et plomb 19, destinée à limiter le bruit de fond et de réduire l'impact d'éventuelles émissions transverses pouvant fausser la mesure.

Le dispositif de support 14 comporte une traverse de support 20 s'étendant dans une direction transversale Y. Cette direction transversale Y est destinée à s'étendre en travers de l'individu 12. Ainsi, en considérant que l'individu 12 s'étend le long d'une direction générale A, le dispositif de support 14 est disposé de sorte que la direction transversale Y soit sensiblement perpendiculaire à cette direction générale A.

La traverse de support 20 est portée par au moins un pied de support 22. Plus particulièrement, dans l'exemple représenté, le dispositif de support 14 comporte quatre pieds de support 22, deux d'entre eux étant disposés à chaque extrémité de la traverse 20.

Chaque pied de support 22 s'étend entre une extrémité inférieure 22A destinée à être posée sur un sol 24, et une extrémité supérieure 22B portant ladite traverse de support 20.

Les termes « posé sur le sol 24 » impliquent que chaque pied de support 22 est uniquement posé sur le sol 24, sans comporter de fixation ou d'ancrage à ce sol 24. En effet, comme indiqué précédemment, le dispositif de support 14 est portable, et doit donc aisément pouvoir être disposé et retiré d'un lieu d'utilisation.

La traverse 20 est portée, dans une direction verticale Z, à une hauteur définie par les pieds de support 22. Avantageusement, chaque pied de support 22 est manoeuvrable de sorte que ladite hauteur est modifiable, pour disposer cette traverse 20 à une hauteur souhaitée adéquate pour l'utilisation du dispositif de mesure 10.

Par exemple, l'extrémité supérieure 22B de chaque pied 22 est relié à la traverse 20 par un élément de liaison 26.

Par ailleurs, chaque pied de support 22 est télescopique, si bien que sa longueur est variable, la hauteur de la traverse 20 pouvant être modifiée en fonction de cette longueur des pieds de support 22.

Le dispositif de support 14 comporte par ailleurs un organe de support 28, porté par la traverse 20, et comprenant des première 28A et seconde 28B parties mobiles l'une par rapport à l'autre dans une direction longitudinale X perpendiculaire à la direction transversale Y. A cet effet, ces première 28A et seconde 28B parties sont par exemple télescopiques.

La première partie mobile 28A porte le premier détecteur 16, et la seconde partie mobile 28B porte le second détecteur 18. Ainsi, l'écartement entre le premier détecteur 16 et le second détecteur 18 est variable, et peut donc être adapté à la morphologie de l'individu 12, notamment à sa taille qui peut varier grandement, la population d'individus à examiner pouvant comporter des adultes et des enfants.

De préférence, le premier détecteur 16 est relié à la première partie mobile 28A par un bras déployable et avantageusement inclinable, permettant de rapprocher le premier détecteur du cou de l'individu 12, par exemple jusqu'à 3 cm de ce cou.

Avantageusement, l'organe de support 28 est mobile par inclinaison autour de la traverse 20, autour d'un axe parallèle à la direction transversale Y. Ainsi, l'orientation des premier 16 et second 18 détecteurs peut être adaptée à la position de l'individu 12, pour aligner à la direction longitudinale X avec la direction générale A dans laquelle l'individu 12 s'étend. Cette inclinaison est par exemple effectuée par modification de la longueur des pieds télescopiques 22.

On notera que la traverse 20 est par exemple formée de deux parties, de part et d'autre de l'organe de support 28, chaque partie reliant l'organe de support 28 à l'un respectif des éléments de liaison 26. Ces deux parties peuvent présenter des longueurs sensiblement identiques, ou en variante des longueurs différentes.

Dans l'exemple de la figure 1, l'individu 12 est allongé, si bien que la direction générale A est perpendiculaire à la direction verticale Z. La direction longitudinale X est donc alignée avec cette direction générale A, sensiblement perpendiculairement à la direction verticale Z. Les premier 16 et second 18 détecteurs sont alors orientés vers le bas dans la direction verticale Z.

Dans le cas où l'individu 12 est assis, par exemple sur un fauteuil roulant, la direction générale A de l'individu 12 serait sensiblement parallèle à la direction verticale Z, ou légèrement inclinée par rapport à cette direction verticale Z. Afin d'orienter les premier 16 et second 18 détecteurs vers l'individu 12, l'organe de support 28 doit alors être incliné de manière à orienter ces premier 16 et second 18 détecteurs sensiblement horizontalement.

Dans le cas où l'individu 12 est incliné, par exemple sur un brancard incliné à 45°, il est également possible d'incliner l'organe de support 28 pour orienter les premier 16 et second 18 détecteurs vers l'individu 12.

Ainsi, en modifiant la hauteur de la traverse 20 en manoeuvrant les pieds de support 22, en modifiant l'inclinaison de l'organe de support 28, et en modifiant l'écartement entre les premier 16 et second 18 détecteurs, il est possible d'adapter le dispositif de mesure 10 à toutes les configurations d'individus et de types de mesures.

Dans l'état de la technique, les modifications de positionnement des détecteurs sont limitées, ce qui fait que ces détecteurs de l'état de la technique présentent de grandes dimensions pour pouvoir couvrir toutes les configurations d'individus.

Dans l'invention, grâce à la grande capacité d'adaptation du dispositif de support 14, les premier 16 et second 18 détecteurs présentent des dimensions réduites. Le dispositif de support 14 peut ainsi présenter également des dimensions réduites tout en pouvant porter de manière stable et efficace les premier 16 et second 18 détecteurs.

Ainsi, le dispositif de support 14 est portable. Par « portable », on entend que le dispositif de support 14 peut être transporté par un ou deux opérateurs.

A cet effet, la masse du dispositif de support 14 est inférieure ou égale à 40 kg. De préférence, on limite la répartition de cette masse en deux parties inférieures ou égales à 25 kg lorsque le dispositif de support 14 est destiné à être transporté par un seul opérateur, ou en variante peut être répartie en plusieurs modules, dont la masse totale est inférieure ou égale à 40 kg.

Par exemple, avantageusement, chaque pied de support 22 présente un diamètre inférieur à 10 cm. La traverse 20 présente aussi par exemple un diamètre inférieur à 10 cm. Dans l'exemple représenté, les pieds de support 22 et la traverse 20 sont tous à section transversale circulaire, mais d'autres sections sont envisageables, notamment rectangulaire ou carrée.

Les pieds de support 22 et la traverse 20 sont par exemple réalisés dans un matériau rigide, léger et présentant une radioactivité naturelle nulle pour ne pas fausser les mesures.

Les pieds de support 22 sont par exemple formés de deux parties télescopiques permettant une variation de longueur comprise entre 650mm (minimum) et 1150mm (maximum).

La traverse 20 est par exemple formée de deux tubes, par exemple de longueur égale à 320mm, 370mm ou 445mm.

Avantageusement, le dispositif de support 14 est démontable, afin de faciliter encore sa mobilité. Le dispositif de support 14 démonté peut être ainsi transporté dans une valise adaptée à cet effet, ou réparti dans deux valises ou plus.

Ainsi, chaque pied de support 22 est avantageusement assemblé de manière amovible à la traverse 20, par l'intermédiaire de l'organe de support 28. Cet assemblage de manière amovible peut être réalisé de toutes les façons envisageables.

De même, l'organe de support 28 est avantageusement assemblé de manière amovible à la traverse 20.

Enfin, chaque détecteur 16, 18 est avantageusement assemblé de manière amovible à l'organe de support 28.

Le dispositif de mesure 10 comporte par ailleurs un dispositif d'acquisition de données 30, comprenant une chaîne 32 d'acquisition de données reliée aux détecteurs 16, 18 pour en récolter des données, et des moyens de spectrométrie gamma 34, propres à acquérir un spectre à partir des données récoltées, et à analyser ce spectre.

La chaîne d'acquisition 32 est formée par un ensemble de composants électroniques propres à relier les détecteurs 16, 18 aux moyens de spectrométrie 34, pour récolter les données depuis les détecteurs 16, 18 pour les transmettre aux moyens de spectrométrie 34.

Avantageusement, la chaîne d'acquisition 32 est configurée pour délivrer une haute tension, pour amplifier les signaux, et comporte un codeur et un analyseur multicanaux.

Par exemple, la chaîne d'acquisition 32 est formée par un module UniSPEC^{®} de la société Canberra, relié aux moyens de spectrométrie 34 via un câble USB.

Les moyens de spectrométrie 34 permettent la visualisation et l'enregistrement simultanés de spectres gamma, qui sont ensuite analysés par un logiciel de spectrométrie 35 connu en soi, par exemple le logiciel de spectrométrie Génie 2000^{®} de CANBERRA et le logiciel GEMINI^{®} développé par l'IRSN. Les moyens de spectrométrie 34 sont par exemple formés par un ordinateur configuré à cet effet. Cet ordinateur est par exemple destiné à être embarqué dans un véhicule, ou être de type portable.

Les moyens de spectrométrie 34 comportent de manière classique une interface homme/machine 36. Avantageusement, cette interface 36 est simplifiée pour être aisément utilisée par un opérateur sans nécessiter de formation poussée dans l'utilisation d'un logiciel de spectrométrie. Le logiciel GEMINI^{®} évoqué ci-dessus propose une telle interface simplifiée.

On notera que la chaine d'acquisition est pilotée par l'interface 36 associée au logiciel 35.

Enfin, les moyens de spectrométrie 34 comportent de manière classique des moyens 38 de lecture du spectre.

Les spectres sont visualisés, analysés, et permettent de fournir des données anthroporadiométriques 40.

L'utilisation du dispositif d'acquisition de données 30 est connue en soi, et ne sera donc pas décrite plus en détail.

On notera que l'invention n'est pas limitée au mode de réalisation précédemment décrit, mais pourrait présenter diverses variantes complémentaires.

## Revendications

1. Dispositif (10) de mesure d'une contamination radioactive chez un individu (12), comportant un premier détecteur (16) conformé pour une mesure sur une thyroïde de l'individu (12), et un second détecteur (18) conformé pour une mesure sur un thorax de l'individu (12), **caractérisé en ce qu'**il comporte un dispositif portable (14) de support des premier (16) et second (18) détecteurs, comprenant :
- une traverse de support (20) s'étendant dans une direction transversale (Y),
- au moins un pied de support (22), s'étendant entre une extrémité inférieure (22A) destinée à être posée sur un sol (24), et une extrémité supérieure (22B) portant ladite traverse de support (20),
- un organe de support (28), porté par la traverse (20), comprenant des première (28A) et seconde (28B) parties mobiles l'une par rapport à l'autre dans une direction longitudinale (X) perpendiculaire à la direction transversale (Y), la première partie mobile (28A) portant le premier détecteur (16), et la seconde partie mobile (28B) portant le second détecteur (18).

2. Dispositif de mesure (10) selon la revendication 1, dans lequel l'organe de support (28) est mobile par inclinaison autour de la traverse (20), autour de la direction transversale (Y).

3. Dispositif de mesure (10) selon l'une quelconque des revendications précédentes, dans lequel la traverse (20) étant portée, dans une direction verticale (Z), à une hauteur définie par l'au moins un pied de support (22), chaque pied de support (22) est manoeuvrable de sorte que ladite hauteur est modifiable.

4. Dispositif de mesure (10) selon la revendication 3, dans lequel chaque pied de support (22) est télescopique.

5. Dispositif de mesure (10) selon l'une quelconque des revendications précédentes, dans lequel la masse du dispositif de support (28) est inférieure à 40 kg.

6. Dispositif de mesure (10) selon l'une quelconque des revendications précédentes, dans lequel chaque pied de support (22) est assemblé de manière amovible à la traverse.

7. Dispositif de mesure (10) selon l'une quelconque des revendications précédentes, comportant un dispositif d'acquisition de données (30), comprenant :
- une chaîne (32) d'acquisition de données reliée aux détecteurs (16, 18) pour en récolter des données,
- des moyens (34) de spectrométrie gamma, propre à acquérir un spectre à partir des données récoltées, et à analyser ce spectre.

## Patentansprüche

1. Messvorrichtung (10) zur Messung einer radioaktiven Kontamination bei einer Person (12), mit einem ersten Detektor (16), der für eine Messung an einer Schilddrüse der Person (12) ausgebildet ist, und einem zweiten Detektor (18), der für eine Messung an einem Brustkorb der Person (12) ausgebildet ist, **dadurch gekennzeichnet, dass** sie eine tragbare Vorrichtung (14) zum Tragen des ersten (16) und des zweiten (18) Detektors umfasst, wobei die Messorrichtung (10) Folgendes umfasst:
- einen Stützquerträger (20), der sich in einer Querrichtung (Y) erstreckt,
- mindestens einen Stützfuß (22), der sich zwischen einem unteren Ende (22A), das dazu bestimmt ist, auf einen Boden (24) gestellt zu werden, und einem oberen Ende (22B), das den Stützquerträger (20) trägt, erstreckt,
- ein Stützelement (28), das von dem Querträger (20) getragen wird und einen ersten (28A) und einen zweiten (28B) Teil umfasst, die relativ zueinander in einer Längsrichtung (X) senkrecht zur Querrichtung (Y) beweglich sind, wobei der erste bewegliche Teil (28A) den ersten Detektor (16) trägt und der zweite bewegliche Teil (28B) den zweiten Detektor (18) trägt.

2. Messvorrichtung (10) nach Anspruch 1, wobei das Stützelement (28) um den Querträger (20) herum um die Querrichtung (Y) kippbar beweglich ist.

3. Messvorrichtung (10) nach einem der vorhergehenden Ansprüche, wobei der Querträger (20) in einer vertikalen Richtung (Z) auf einer Höhe getragen wird, die durch den mindestens einen Stützfuß (22) definiert ist, wobei jeder Stützfuß (22) derart betätigbar ist, dass die Höhe veränderbar ist.

4. Messvorrichtung (10) nach Anspruch 3, wobei jeder Stützfuß (22) teleskopisch ist.

5. Messvorrichtung (10) nach einem der vorhergehenden Ansprüche, wobei die Masse des Stützelements (28) weniger als 40 kg beträgt.

6. Messvorrichtung (10) nach einem der vorhergehenden Ansprüche, wobei jeder Stützfuß (22) lösbar mit dem Querträger verbunden ist.

7. Messvorrichtung (10) nach einem der vorhergehenden Ansprüche, mit einer Datenerfassungsvorrichtung (30), die Folgendes umfasst:
- eine Datenerfassungskette (32), die mit den Detektoren (16, 18) verbunden ist, um Daten von diesen zu sammeln,
- Mittel (34) zur Gamma-Spektrometrie, die geeignet sind, ein Spektrum aus den gesammelten Daten zu erfassen und dieses Spektrum zu analysieren.

## Claims

1. A device (10) for measuring radioactive contamination in an individual (12), comprising a first detector (16) shaped for measurement on a thyroid of the individual (12), and a second detector (18) shaped for measurement on a thorax of the individual (12), **characterized in that** it comprises a portable device (14) for supporting the first (16) and second (18) detectors, comprising:
- a support crosspiece (20) extending in a transverse direction (Y),
- at least one support foot (22), extending between a lower end (22A) intended to be placed on a floor (24), and an upper end (22B) carrying said support crosspiece (20),
- a support member (28), carried by the crosspiece (20), comprising first (28A) and second (28B) parts movable relative to one another in a longitudinal direction (X) perpendicular to the transverse direction (Y), the first movable part (28A) carrying the first sensor (16), and the second movable part (28B) carrying the second sensor (18).

2. Measuring device (10) according to claim 1, in which the support member (28) is movable by tilting about the crosspiece (20), about the transverse direction (Y).

3. Measuring device (10) according to any of the preceding claims, in which the crosspiece (20) is carried, in a vertical direction (Z), at a height defined by the at least one support foot (22), each support foot (22) being maneuverable, so that said height is modifiable.

4. Measuring device (10) according to claim 3, wherein each support foot (22) is telescopic.

5. Measuring device (10) according to any of the preceding claims, wherein the mass of the support device (28) is less than 40 kg.

6. Measuring device (10) according to any of the preceding claims, wherein each support foot (22) is removably connected to the crosspiece.

7. Measuring device (10) according to any of the preceding claims, including a data acquisition device (30), comprising:
- a data acquisition chain (32) connected to the detectors (16, 18) to collect data therefrom,
- gamma spectrometry means (34) for acquiring and analyzing a spectrum from the collected data.
